(19) Europäisches Patentamt
European Patent Office
Office européen des brevets

(11) Veröffentlichungsnummer: **0 317 887 B1**

(12) # EUROPÄISCHE PATENTSCHRIFT

(45) Veröffentlichungstag der Patentschrift: **05.04.95**

(51) Int. Cl.⁶: **C08K 5/53**

(21) Anmeldenummer: **88119075.5**

(22) Anmeldetag: **17.11.88**

Die Akte enthält technische Angaben, die nach dem Eingang der Anmeldung eingereicht wurden und die nicht in dieser Patentschrift enthalten sind.

(54) **Verfahren zur Herstellung von Polyurethan- und Polyisocyanuratschaumstoffen unter Verwendung von Phosphorigsäure-tris (2-propyl-2-phosphonsäure-dimethylester).**

(30) Priorität: **24.11.87 DE 3739764**

(43) Veröffentlichungstag der Anmeldung:
**31.05.89 Patentblatt 89/22**

(45) Bekanntmachung des Hinweises auf die Patenterteilung:
**05.04.95 Patentblatt 95/14**

(84) Benannte Vertragsstaaten:
**BE CH DE GB LI**

(56) Entgegenhaltungen:
**DE-A- 2 732 292**
**GB-A- 941 706**
**US-A- 3 014 944**
**US-A- 3 058 941**

**Ballard/Taylor Polyurethanes World Congress, 1991 Proceedings of the SPI ISOPA, September 24-26, 1991. S.182-189**

**Oertel, Polyurethane, Kunststoff Handbuch Band 7 (2.Ausgabe, Hanser Verlag 1983), S.273**

(73) Patentinhaber: **BAYER AG**

**D-51368 Leverkusen (DE)**

(72) Erfinder: **Wiedermann, Rolf, Dr.**
**Wiesenstrasse 18**
**D-5068 Odenthal (DE)**
Erfinder: **Adam, Norbert, Dr.**
**Semmelweisstrasse 79**
**D-5000 Koeln 80 (DE)**

**EP 0 317 887 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Der Einsatz phosphorhaltiger Flammschutzmittel bei der Herstellung von Kunststoffen auf Isocyanatbasis, vorzugsweise von Polyurethan- und Polyisocyanurat-Kunststoffen einschließlich Schaumstoffen, ist seit langem üblich.
Ein gängiges Flammschutzmittel ist beispielsweise Trichlorethylphosphat (TCAP).

Dieses Flammschutzmittel hat jedoch eine schlechte Löslichkeit der Polyolmischung für das Treibmittel, z.B. Trichlorfluormethan, zur Folge und führt im Brandfall zu einer Belastung mit Halogen.

Aufgabe der Erfindung war, ein Flammschutzmittel zu finden, das sowohl frei von Halogen ist als auch eine gute Löslichkeit für das Treibmittel bewirkt.

Überraschenderweise wurde nun gefunden, daß die halogenfreie Verbindung Phosphorigsäuretris-(2-propyl-2-phosphonsäure-dimethylester) der Formel

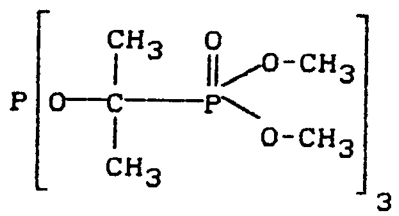

eine hervorragende Löslichkeit für organische Treibmittel bewirkt.

Gegenstand der Erfindung ist ein Verfahren zur Herstellung von Polyurethan- und Polyisocyanuratschaumstoffen durch Umsetzung von

1.) Polyisocyanaten mit
2.) Verbindungen mit mindestens zwei gegenüber Isocyanaten reaktionsfähigen Wasserstoffatomen und einem Molekulargewicht von 400 - 10 000 in Gegenwart von
3.) leicht flüchtigen organischen Substanzen und gegebenenfalls Wasser als Treibmittel und in Gegenwart von
4.) Flammschutzmitteln sowie gegebenenfalls in Gegenwart von
5.) Verbindungen mit mindestens zwei gegenüber Isocyanaten reaktionsfähigen Wasserstoffatomen und einem Molekulargewicht von 32 - 399 und gegebenenfalls in Gegenwart von
6.) weiteren Hilfs- und Zusatzmitteln,

dadurch gekennzeichnet,
daß als Flammschutzmittel 4) Phosphorigsäure-tris-(2-propyl-2-phosphonsäuredimethylester) verwendet wird.

Die Herstellung von Phosphorigsäure-tris-(2-propyl-2-phosphonsäure-dimethylester erfolgt z. B. durch Umsetzung von Aceton (wasserfrei), Phosphortrichlorid und Trimethylphosphit in den entsprechenden molaren Mengenverhältnissen. Dabei wird Phosphortrichlorid und Aceton vorgelegt und Trimethylphosphit langsam zugegeben.

Erfindungsgemäß ist bevorzugt, daß Phosphorigsäure-tris-(2-propyl-2-phosphonsäure-dimethylester) in einer Menge von 1 bis 20 Gew.-%, insbesondere in einer Menge von 2 bis 10 Gew.-%, bezogen auf den Schaumstoff, eingesetzt wird.

Die Herstellung von Polyurethan- und Polyisocyanuratschaumstoffen ist an sich bekannt und z.B. in den deutschen Offenlegungsschriften 1 694 142, 1 694 215 und 1 720 768 sowie im Kunststoff-Handbuch Band VII, Polyurethane, herausgegeben von Vieweg und Höchtlen, Carl Hanser Verlag München 1966 sowie in der Neuauflage dieses Buches, herausgegeben von G. Oertel, Carl Hanser Verlag München, Wien 1983, beschrieben.

Für die Herstellung der Polyurethan- und Polyisocyanuratschaumstoffe werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$

in der

n = 2-4, vorzugsweise 2-3,
und
Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zuganglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Ausgangskomponenten sind ferner Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.

3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.

4. Als Treibmittel werden erfindungsgemäß leicht flüchtige organische Substanzen sowie gegebenenfalls Wasser verwendet.

5. Gegebenenfalls werden Hilfs- und Zusatzmittel mitverwendet wie

a) zusätzliche Katalysatoren der an sich bekannten Art in Mengen von bis zu 10 Gew.-%, bezogen auf die Mengen an Komponente 2),

b) oberflächenaktive Zusatzstoffe, wie Emulgatoren und Schaumstabilisatoren,

c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß-oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des erfindungsgemäßen Verfahrens:
Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Erfindungsgemäß lassen sich auch kalthärtende Schaumstoffe herstellen (vgl. GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. als Dammplatten für die Dachisolierung Anwendung.

Beispiele

Die Löslichkeit für das Treibmittel Trichlorfluormethan in Polyolformulierungen, die das Standard-Flammschutzmittel TCAP enthalten, ist oft nicht ausreichend, zumal bei Rezepturen für Polyisocyanurat-Schaumstoffe das Treibmittel in geringeren Polyolmengen gelöst werden muß als bei Formulierungen für Polyurethan-Schaumstoffe.

| | erfindungsgemäßes Beispiel | | Vergleichsbeispiel | |
|---|---|---|---|---|
| Sucrose/Propylenglykol-Propylenoxid-Polyether, OHZ 370 | 17 | GT | 17 | GT |
| Phthalsäure-/Adipinsäure/Glycerin/Propylenglykol-Polyester, OHZ 210 | 10 | GT | 10 | GT |
| Propylenglykol-Ethylenoxid-Polyether, OHZ 190 | 3 | GT | 3 | GT |
| Ethylendiamin-EO/PO-Polyether, OHZ 650 | 2,5 | GT | 2,5 | GT |
| Glycerin | 1,5 | GT | 1,5 | GT |
| Tris-ß-chlorethylphosphat | - | | 15 | GT |
| Phosphorigsäure-tris-(2-propyl-2-phosphonsäure-dimethylester) | 15 | GT | - | |
| Siliconstabilisator | 1 | GT | 1 | GT |
| Glykolische Alkali-Acetat-Lösung | 3,1 | GT | 3,1 | GT |
| R 11 | 31 | GT | 31 | GT |
| Polymeres Diphenyl-Methyl-Diisocyanat (Desmodur 44 V 20) | 100 | GT | 100 | GT |
| Brandklasse (DIN 4102) | B 2 | | B 2 | |
| Löslichkeit des Treibmittels R 11 in der Polyolformulierung | >31 | GT | 28 | GT |

GT - Gewichtsteile

Während die Löslichkeit des Treibmittels in der Polyolformulierung des erfindungsgemäßen Beispiels ausreichend ist, führt die nicht ausreichende Löslichkeit beim Vergleichsbeispiel zu Problemen beim Einsatz in der Praxis, weil in der Verarbeitungsmaschine das Treibmittel separiert und dadurch eine konstante Dosierung verhindert wird.

## Patentansprüche

1. Verfahren zur Herstellung von Polyurethan- und Polyisocyanuratschaumstoffen durch Umsetzung von
   1.) Polyisocyanaten mit
   2.) Verbindungen mit mindestens zwei gegenüber Isocyanaten reaktionsfähigen Wasserstoffatomen und einem Molekulargewicht von 400 - 10000 in Gegenwart von
   3.) leicht flüchtigen organischen Substanzen und ggf. Wasser als Treibmittel und im Gegenwart von
   4.) Flammschutzmitteln sowie gegebenenfalls in Gegenwart von
   5.) Verbindungen mit mindestens zwei gegenüber Isocyanaten reaktionsfähigen Wasserstoffatomen und einem Molekulargewicht von 32 - 399 und gegebenenfalls in Gegenwart von
   6.) weiteren Hilfs- und Zusatzmitteln,
   dadurch gekennzeichnet,
   daß als Flammschutzmittel 4) Phosphorigsäure-tris-(2-propyl-2-phosphonsäuredimethylester) verwendet wird.

2. Verfahren gemäß Anspruch 1, dadurch gekennzeichnet wird, daß Phosphorigsäure-tris-(2-propyl-2-phosphonsäure-dimethylester) in einer Menge von 1 - 20 Gew.-%, bezogen auf den Schaumstoff, verwendet wird.

3. Verfahren gemäß Anspruch 1 und 2, dadurch gekennzeichnet daß Phosphorigsäure-tris-(2-propyl-2-phosphonsäure-dimethylester) in einer Menge von 2 - 10 Gew.-%, bezogen auf den Schaumstoff, verwendet wird.

## Claims

1. A process for the production of polyurethane and polyisocyanurate foams by reaction of
   1.) polyisocyanates with
   2.) compounds containing at least two isocyanate-reactive hydrogen atoms and having a molecular weight of 400 to 10,000 in the presence of
   3.) readily volatile organic substances and optionally water as blowing agent and in the presence of
   4.) flameproofing agents and optionally in the presence of
   5.) compounds containing at least two isocyanate-reactive hydrogen atoms and having a molecular weight of 32 to 399 and optionally in the presence of
   6.) other auxiliaries and additives,

   characterized in that phosphorous acid tris-(2-propyl-2-phosphonic acid dimethyl ester) is used as the flameproofing agent 4.).

2. A process as claimed in claim 1, characterized in that phosphorous acid tris-(2-propyl-2-phosphonic acid dimethyl ester) is used in a quantity of 1 to 20% by weight, based on the foam.

3. A process as claimed in claims 1 and 2, characterized in that phosphorous acid tris-(2-propyl-2-phosphonic acid dimethyl ester) is used in a quantity of 2 to 10% by weight, based on the foam.

## Revendications

1. Procédé pour la préparation de mousses de polyuréthanne et de polyisocyanurate par la mise en réaction de
   1) polyisocyanates avec
   2) des composés contenant au moins deux atomes d'hydrogène aptes à réagir vis-à-vis d'isocyanates et possédant un poids moléculaire de 400-10.000, en présence
   3) de substances organiques très volatiles et éventuellement d'eau comme agent moussant, et en présence
   4) d'agents ignifuges, ainsi qu'éventuellement en présence
   5) de composés contenant au moins deux atomes d'hydrogène aptes à réagir vis-à-vis d'isocyanates et possédant un poids moléculaire de 32-399, éventuellement en présence
   6) d'autres adjuvants et additifs,

   caractérisé en ce que
   comme agent ignifuge 4), on utilise le tris-(ester diméthylique de l'acide 2-propyl-2-phosphonique) de

l'acide phosphoreux.

2. Procédé selon la revendication 1, caractérisé en ce qu'on utilise le tris-(ester diméthylique de l'acide 2-propyl-2-phosphonique) de l'acide phosphoreux en une quantité de 1-20% en poids, rapportée à la mousse.

3. Procédé selon les revendications 1 et 2, caractérisé en ce qu'on utilise le tris-(ester diméthylique de l'acide 2-propyl-2-phosphonique) de l'acide phosphoreux en une quantité de 2-10% en poids, rapportée à la mousse.